# EUROPEAN PATENT APPLICATION

(11) **EP 4 772 915 A1**
(43) Date of publication of application: **08.07.2026**
(21) Application number: 25172497.7
(22) Date of filing: 25.04.2025
(51) Int. Cl.: G02B 6/122

(54) **PHOTONIC COMPONENTS WITH A SEGMENTED WAVEGUIDE CORE**

(30) Priority: 06.01.2025 US 202519010415
(71) Applicant: GlobalFoundries U.S. Inc., Malta, NY 12020 (US)
(72) Inventor: BIAN, Yusheng, Malta, NY, 12020 (US)
(74) Representative: Lambacher, Michael

(57) **Abstract**

Structures for a photonic component and methods of forming a structure for a photonic component. The photonic structure comprises a semiconductor substrate, a first waveguide core including a first plurality of segments, and a second waveguide core including a second plurality of segments. The second plurality of segments are positioned between the first plurality of segments and the substrate.

## Description

### BACKGROUND

The disclosure relates to photonic chips and, more specifically, to structures for a photonic component and methods of forming a structure for a photonic component.

Photonic chips are used in many applications and systems including, but not limited to, data communication systems, data centers, and data computation systems. A photonic chip includes a photonic integrated circuit comprised of photonic components, such as modulators, polarizers, and couplers, that are used to manipulate light received from a light source, such as a laser or an optical fiber.

Improved structures for a photonic component and methods of forming a structure for a photonic component are needed.

### SUMMARY

In an embodiment of the invention, a photonic structure comprises a semiconductor substrate, a first waveguide core including a first plurality of segments, and a second waveguide core including a second plurality of segments. The second plurality of segments are positioned between the first plurality of segments and the substrate.
The first plurality of segments may have an overlapping relationship with the second plurality of segments; alternatively, the first plurality of segments may have a partially overlapping relationship with the second plurality of segments.
Further, the first plurality of segments may comprise a first material, the second plurality of segments may comprise a second material, and the second material may differ from the first material; alternatively, the first plurality of segments and the second plurality of segments may comprise identical materials.
Further, the above-mentioned photonic structure may further comprise a first dielectric layer comprising a first dielectric material; the first dielectric layer may include a portion positioned between the first plurality of segments and the second plurality of segments. Further, the first plurality of segments may have a first refractive index, the second plurality of segments may have a second refractive index, and the first dielectric material may have a third refractive index that is less than either the first refractive index or the second refractive index. Additionally or alternatively, the first plurality of segments may be separated by a first plurality of spaces, the first dielectric material may include portions that are positioned inside the first plurality of spaces, and the first plurality of segments and the portions of the first dielectric material may comprise a first metamaterial structure.
Further, the above-mentioned photonic structure may further comprise a second dielectric layer comprising a second dielectric material, wherein the second plurality of segments may be separated by a second plurality of spaces, the second dielectric material may include portions that are positioned inside the second plurality of spaces, and the second plurality of segments and the portions of the second dielectric material may comprise a second metamaterial structure. Further, the first plurality of segments may be arranged in a first pattern, the second plurality of segments may be arranged in a second pattern, and the first pattern may be identical to the second pattern; alternatively, the first plurality of segments may be arranged in a first pattern, the second plurality of segments may be arranged in a second pattern, and the first pattern may differ from the second pattern. In both variants, the first pattern may be a first two-dimensional array, and the second pattern may be a second two-dimensional array.
Further, the first plurality of segments may be arranged in a first bend, and the second plurality of segments may be arranged in a second bend.
Further, the first waveguide core may include a first section, the second waveguide core may include a second section that overlies the first section of the first waveguide core, the first plurality of segments of the first waveguide core in the first section may terminate the first waveguide core, and the second plurality of segments of the second waveguide core in the second section may terminate the second waveguide core. Further, the photonic structure may further comprise a light source on the semiconductor substrate; the light source may be configured to generate light that is coupled to the first section of the first waveguide core and the second section of the second waveguide core.
Further, the semiconductor substrate of the photonic structure may have a top surface, the first plurality of segments may be distributed in a first plane that is parallel to the top surface, and the second plurality of segments may be distributed in a second plane that is parallel to the top surface.
Still further, the photonic structure may further comprise a third waveguide core including a third plurality of segments; the first plurality of segments may be positioned between the second plurality of segments and the third plurality of segments. Additionally or alternatively, the structure may further comprise a third waveguide core including a third plurality of segments and a fourth waveguide core including a fourth plurality of segments; the fourth plurality of segments may be positioned between the third plurality of segments and the semiconductor substrate.

In an embodiment of the invention, a method of forming a photonic structure is provided. The method comprises forming a first waveguide core including a first plurality of segments and forming a second waveguide core including a second plurality of segments. The second plurality of segments are positioned between the first plurality of segments and a semiconductor substrate.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure at an initial fabrication stage of a processing method in accordance with embodiments of the invention.
FIG. 1A is a cross-sectional view taken generally along line 1A-1A in FIG. 1.
FIG. 2 is a cross-sectional view of the structure at a fabrication stage of the processing method subsequent to FIGS. 1, 1A.
FIG. 2A is a cross-sectional view taken generally along line 2A-2A in FIG. 2.
FIG. 3 is a top view of the structure at a fabrication stage of the processing method subsequent to FIGS. 2, 2A.
FIG. 3A is a cross-sectional view taken generally along line 3A-3A in FIG. 3.
FIG. 4 is a top view of a structure in accordance with alternative embodiments of the invention.
FIG. 5 is a cross-sectional view of a structure in accordance with alternative embodiments of the invention.
FIG. 6 is a cross-sectional view of a structure in accordance with alternative embodiments of the invention.
FIG. 7 is a top view of a structure in accordance with alternative embodiments of the invention.
FIGS. 8, 8A are top views illustrating a portion of the structure of FIG. 7.

### DETAILED DESCRIPTION

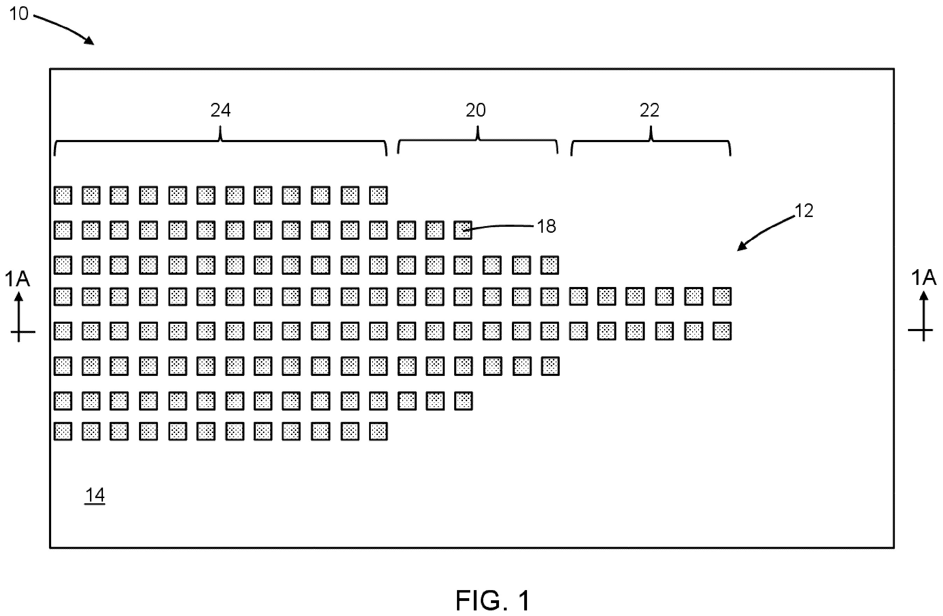

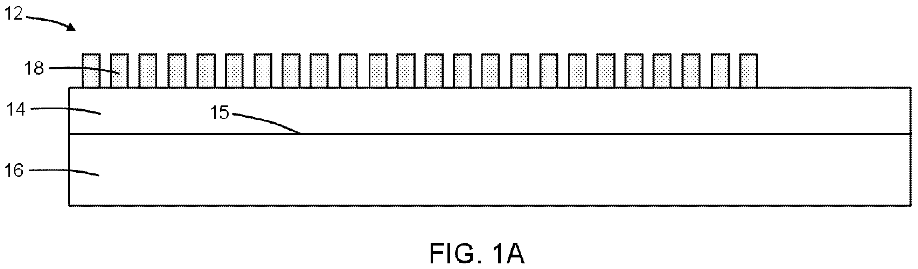

With reference to FIGS. 1, 1A and in accordance with embodiments of the invention, a structure 10 for a photonic component includes a waveguide core 12 that is positioned on, and overlies, a dielectric layer 14 and a semiconductor substrate 16. In an embodiment, the dielectric layer 14 may be comprised of a dielectric material, such as silicon dioxide, and the semiconductor substrate 16 may be comprised of a semiconductor material, such as single-crystal silicon. The semiconductor substrate 16 may have a top surface 15 that adjoins the dielectric layer along an interface. In an embodiment, the dielectric layer 14 may be a buried oxide layer of a silicon-on-insulator substrate. The dielectric layer 14 may provide low-index cladding that separates the waveguide core 12 from the semiconductor substrate 16.

The waveguide core 12 may include segments 18 that are separated by spaces and that are arranged in a pattern. In an embodiment, the segments 18 may be arranged in the rows and columns of a two-dimensional array. In an embodiment, the segments 18 may be arranged with a uniform pitch and duty cycle in the rows and columns of a two-dimensional array. In an embodiment, the segments 18 may be arranged with a non-uniform pitch and/or non-uniform duty cycle in the rows and columns of a two-dimensional array. In an embodiment, the segments 18 may have a uniform size and shape. In an embodiment, the rows and/or columns of the two-dimensional array may include different numbers of the segments 18. The segments 18 may be distributed in a plane that is parallel to a plane of the top surface 15 of the semiconductor substrate 16.

The waveguide core 12 may include multiple sections 20, 22, 24 in which the segments 18 are distributed and arranged to form the pattern. In an embodiment, the section 20 may be tapered, and the section 22 and the section 24 may be non-tapered. The section 20 of the waveguide core 12 may be arranged inside a tapered envelope having a width dimension that increases with increasing distance from the section 22. In an embodiment, the width dimension of the section 20 of the waveguide core 12 may increase linearly with increasing distance from the section 22. In an alternative embodiment, the width dimension of the section 20 of the waveguide core 12 may vary based on a non-linear function, such as a quadratic function, a cubic function, a parabolic function, a sine function, a cosine function, a Bezier function, or an exponential function. In an embodiment, the section 20 of the waveguide core 12 may include a single stage of tapering characterized by a taper angle. In an alternative embodiment, the section 20 of the waveguide core 12 may taper in multiple stages each characterized by a different taper angle.

The waveguide core 12 may be terminated at one end by the segments 18 in the section 22. The segments 18 may be dimensioned and positioned at small enough pitch so as to define a sub-wavelength grating that does not radiate or reflect light at a wavelength of operation. For example, the periodicity of the segments 18 may be less than one-half the wavelength of the light propagating in the waveguide core 12.

In an embodiment, the waveguide core 12 may be comprised of a dielectric material, such as silicon nitride, silicon oxynitride, or aluminum nitride. In an alternative embodiment, the waveguide core 12 may be comprised of other materials, such as a polymer, thin film lithium niobate, barium titanate or a III-V compound semiconductor. In an embodiment, the waveguide core 12 may be formed by patterning a layer comprised of its constituent material with lithography and etching processes. In an alternative embodiment, an undercut may be formed in the semiconductor substrate 16 beneath all or a portion of the waveguide core 12.

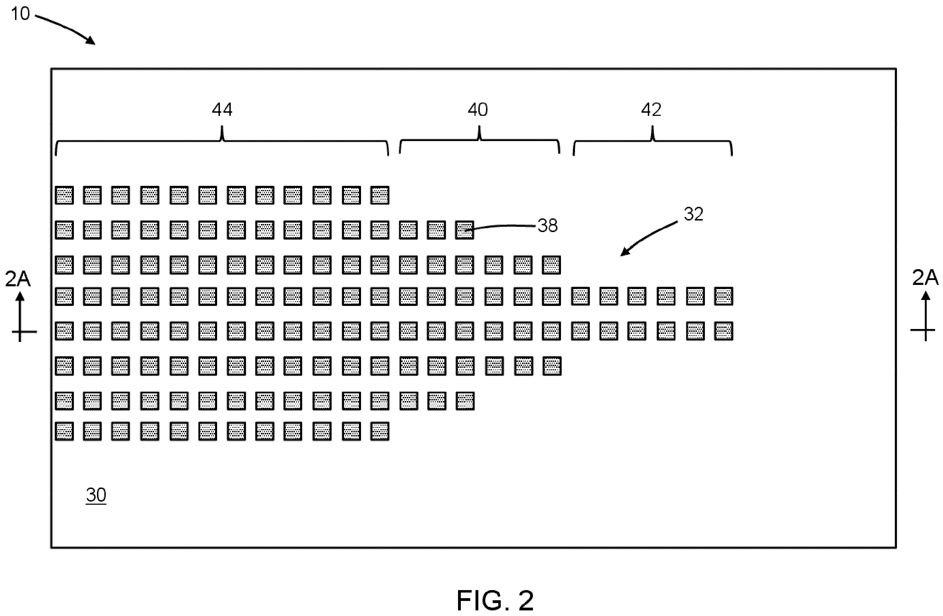

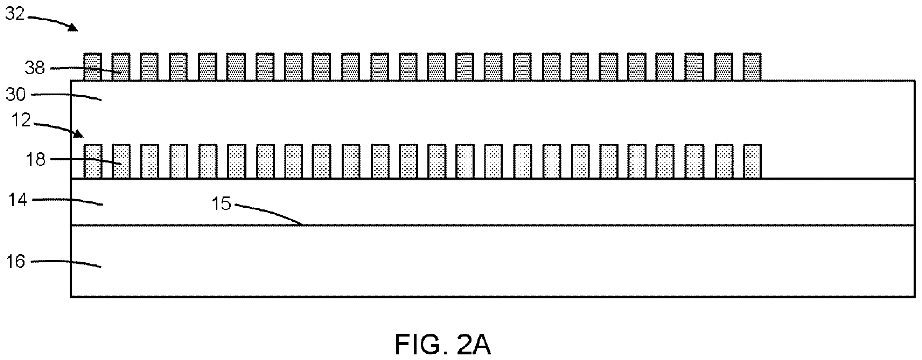

With reference to FIGS. 2, 2A and at a fabrication stage subsequent to FIGS. 1, 1A, a dielectric layer 30 may be formed over the waveguide core 12 and the dielectric layer 14. The dielectric layer 30 may be comprised of a dielectric material, such as silicon dioxide, that is deposited and then planarized following deposition. The dielectric material constituting the dielectric layer 30 may have a refractive index that is less than the refractive index of the material constituting the waveguide core 12.

Portions of the dielectric material of the dielectric layer 30 are positioned in the spaces between the segments 18 of the waveguide core 12 to provide a metamaterial structure. The dielectric material of the dielectric layer 30 is characterized by a refractive index that is less than the refractive index of the material constituting the waveguide core 12. The metamaterial structure may be treated as a homogeneous material having an effective refractive index that is intermediate between the refractive index of the material constituting the waveguide core 12 and the refractive index of the dielectric material constituting the dielectric layer 30.

A waveguide core 32 may be formed that is positioned on, and overlies, the dielectric layer 30. The waveguide core 32 may include segments 38 that are separated by spaces and that are arranged in a pattern. In an embodiment, the segments 38 may be arranged in the rows and columns of a two-dimensional array. In an embodiment, the segments 38 may be arranged with a uniform pitch and duty cycle in the rows and columns of a two-dimensional array. In an embodiment, the segments 38 may be arranged with a non-uniform pitch and/or non-uniform duty cycle in the rows and columns of a two-dimensional array. In an embodiment, the segments 38 may have a uniform size and shape. In an embodiment, the rows and/or columns of the two-dimensional array may include different numbers of the segments 38. The segments 38 may be distributed in a plane that is parallel to a plane of the top surface 15 of the semiconductor substrate 16.

The waveguide core 32 may include multiple sections 40, 42, 44 in which the segments 38 are distributed and arranged to form the pattern. In an embodiment, the section 40 may be tapered, and the section 42 and the section 44 may be non-tapered. The section 40 of the waveguide core 32 may be arranged inside a tapered envelope having a width dimension that increases with increasing distance from the section 42. In an embodiment, the width dimension of the section 40 of the waveguide core 32 may increase linearly with increasing distance from the section 42. In an alternative embodiment, the width dimension of the section 40 of the waveguide core 32 may vary based on a non-linear function, such as a quadratic function, a cubic function, a parabolic function, a sine function, a cosine function, a Bezier function, or an exponential function. In an embodiment, the section 40 of the waveguide core 32 may include a single stage of tapering characterized by a taper angle. In an alternative embodiment, the section 40 of the waveguide core 32 may taper in multiple stages each characterized by a different taper angle.

The waveguide core 32 may be terminated at one end by the segments 38 in the section 42, which overlie the segments 18 in the section 22 that terminate the waveguide core 12. The segments 38 may be dimensioned and positioned at small enough pitch so as to define a sub-wavelength grating that does not radiate or reflect light at a wavelength of operation. For example, the periodicity of the segments 38 may be less than one-half the wavelength of the light propagating in the waveguide core 32.

In an embodiment, the waveguide core 32 may be comprised of a dielectric material, such as silicon nitride, silicon oxynitride, or aluminum nitride. In an alternative embodiment, the waveguide core 32 may be comprised of other materials, such as a polymer, thin film lithium niobate, barium titanate or a III-V compound semiconductor. In an embodiment, the waveguide core 32 may be formed by patterning a layer comprised of its constituent material with lithography and etching processes. In an embodiment, the waveguide core 32 may be comprised of a different material than the waveguide core 12. In an embodiment, the waveguide core 12 and the waveguide core 32 may be comprised of identical materials.

The segments 38 of the waveguide core 32 overlie the segments 18 of the waveguide core 12 with a portion of the thickness of the dielectric layer 30 positioned between the segments 38 of the waveguide core 32 and the segments 18 of the waveguide core 12. The spatial correspondence between the segments 18 and the overlying segments 38 may be exact or may be inexact with differences between the patterns. In an embodiment, the segments 38 of the waveguide core 32 and the underlying segments 18 of the waveguide core 12 may be arranged with identical patterns and exact spatial correspondence. In an embodiment, the segments 38 of the waveguide core 32 may be registered with the underlying segments 18 of the waveguide core 12 such that the segments 38 fully overlap with the underlying segments 18. In an embodiment, the segments 38 of the waveguide core 32 and the underlying segments 18 of the waveguide core 12 may be arranged with different patterns and inexact spatial correspondence. For example, the segments 38 may be arranged with a different pitch than the underlying segments 18. As another example, the number of segments 38 may differ from the number of underlying segments 18. In an alternative embodiment, the segments 38 of the waveguide core 32 may only partially overlap with the underlying segments 18. As another example, the segments 38 may have offsets in one or both horizontal directions relative to the underlying segments 18. In an embodiment, the segments 38 and the underlying segments 18 may have equal cross-sectional areas from a perspective normal to the top surface 15. In an embodiment, the segments 38 and the underlying segments 18 may have unequal cross-sectional areas from a perspective normal to the top surface 15.

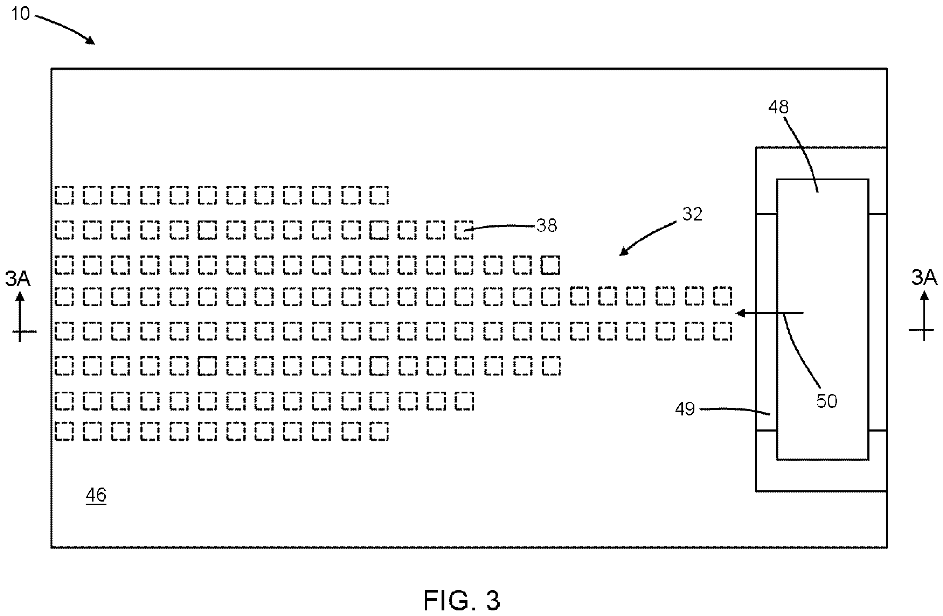

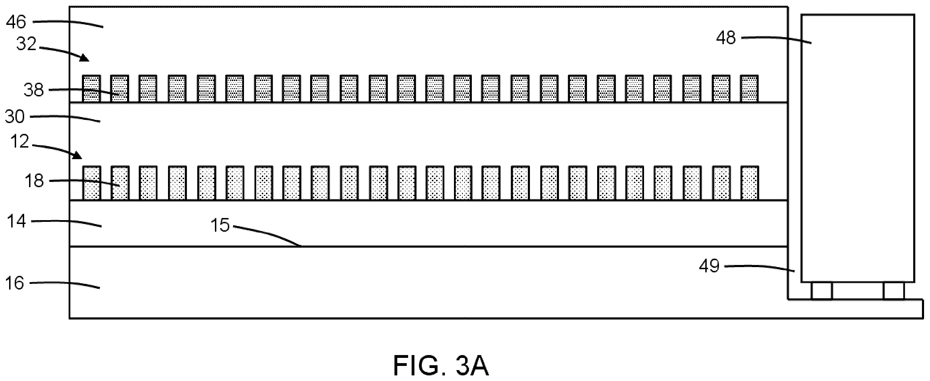

With reference to FIGS. 3, 3A and at a fabrication stage subsequent to FIGS. 2, 2A, a dielectric layer 46 may be formed over the waveguide core 32 and the dielectric layer 30. The dielectric layer 46 may be comprised of a dielectric material, such as silicon dioxide, that is deposited and then planarized following deposition. The dielectric material constituting the dielectric layer 46 may have a refractive index that is less than the refractive index of the material constituting the waveguide core 32.

Portions of the dielectric material of the dielectric layer 46 are positioned in the spaces between the segments 38 of the waveguide core 32 to provide a metamaterial structure. The dielectric material of the dielectric layer 46 is characterized by a refractive index that is less than the refractive index of the material constituting the waveguide core 32. The metamaterial structure may be treated as a homogeneous material having an effective refractive index that is intermediate between the refractive index of the material constituting the waveguide core 32 and the refractive index of the dielectric material constituting the dielectric layer 46.

The composite waveguide core that includes the waveguide core 12 and the waveguide core 32 may be incorporated into a spot-size converter or edge coupler. A light source 48 may be placed in a faceted groove 49 formed adjacent to the section 22 of the waveguide core 12 and the section 42 of the waveguide core 32. In an embodiment, the light source 48 may be an optical fiber, such as a single-mode optical fiber, that includes a tip portion placed in the faceted groove 49 adjacent to the section 22 of the waveguide core 12 and the section 42 of the waveguide core 32. The light source 48 may include a light output 50 that is aligned with the section 22 of the waveguide core 12 and the section 42 of the waveguide core 32 and that is configured to provide light in a mode propagation direction toward the stacked sections 22, 42 of the waveguide cores 12, 32.

In an alternative embodiment, the light source 48 may be a laser chip that includes a semiconductor laser configured to output light from the light output 50 in an infrared wavelength range. In an embodiment, the laser chip may include a semiconductor laser comprised of III-V compound semiconductor materials. In an embodiment, the laser chip may include an indium phosphide/indium-gallium-arsenic phosphide laser that is configured to generate continuous laser light in an infrared wavelength range. In an alternative embodiment, the light source 48 may include a photonic bump having internal turning mirrors and lensed mirrors that collimate and focus light received from an optical fiber and provide the collimated, focused light to the stacked sections 22, 42 of the waveguide cores 12, 32.

The section 22 (FIG. 1) of the waveguide core 12 is longitudinally positioned between the section 20 of the waveguide core 12 and the light source 48. The section 42 (FIG. 2) of the waveguide core 32 is longitudinally positioned between the section 40 of the waveguide core 32 and the light source 48.

The segments 18 of the waveguide core 12 and the segments 38 of the waveguide core 32 may collectively constitute a multiple-layer composite waveguide core that may be integrated into a photonic component of a photonic integrated circuit. The composite waveguide core that includes the waveguide core 12 and the waveguide core 32 may exhibit a reduced coupling loss, as well as a smaller dispersion and wider operational wavelength range compared to conventional waveguide cores. For example, the stacked segments 18, 38 of the waveguide cores 12, waveguide core 32 may relax the confinement of optical power, in comparison with conventional non-segmented waveguide cores, by pushing the mode of the light to the surrounded cladding regions, which include the dielectric layer 30 and the dielectric layer 46, that are less dispersive due to a lower index of refraction.

The composite waveguide core that includes the waveguide core 12 and the waveguide core 32 may provide a building block for photonic components that enables the construction of, for example, a broadband transceiver capable of operating across multiple light bands, including multiple infrared light bands of interest in an artificial intelligence data center. In the representative embodiment, the composite waveguide core may be used as a building block for photonic components, such as an edge coupler, of a transceiver used for converting between optical signals and electrical signals and thereby enabling faster and more efficient fiber-optic data transmission between graphics processing units and racks in the artificial intelligence data center. The composite waveguide core that includes the waveguide core 12 and the waveguide core 32 may enhance data transmission speeds, reduce latency, and increase bandwidth capacity compared to conventional options for data communication in an artificial intelligence data center. For example, the composite waveguide core that includes the waveguide core 12 and the waveguide core 32 may permit bandwidth capacities in excess of one terabit per second for operation across multiple bands in an artificial intelligence data center.

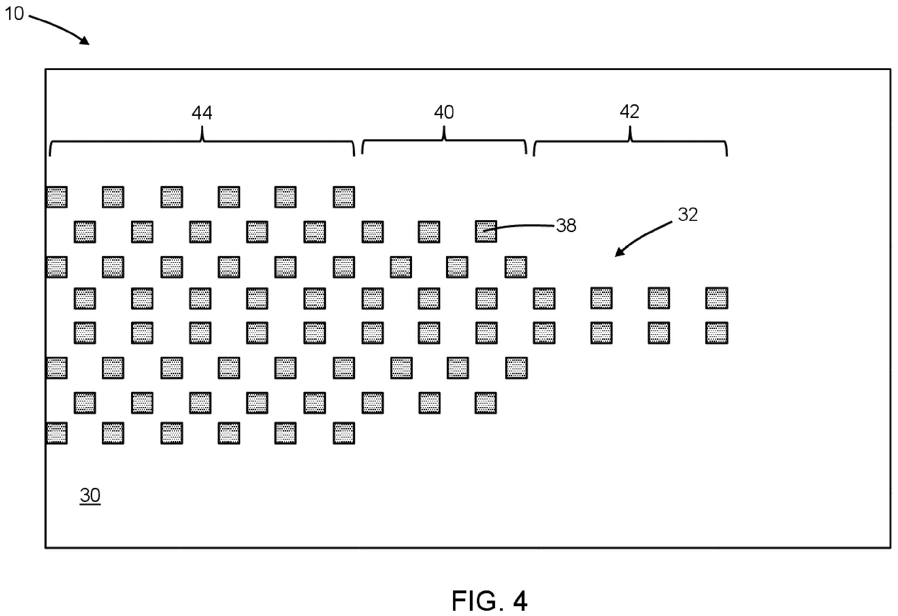

With reference to FIG. 4 and in accordance with alternative embodiments, the pattern characterizing the segments 38 may be altered to increase the pitch relative to the pitch for the pattern characterizing the segments 18. The altered pattern may retain the placement of the segments 38 in a two-dimensional array. In an embodiment, the segments 38 may enlarged to be larger in cross-sectional area from a perspective normal to the top surface 15 than the segments 18. In an alternative embodiment, the segments 38 and the segments 18 may have equal cross-sectional areas from a perspective normal to the top surface 15 but unequal pitches. In an alternative embodiment, the segments 38 and the segments 18 may have unequal cross-sectional areas from a perspective normal to the top surface 15 but equal pitches. In an alternative embodiment, the pitch of the segments 38 may be smaller than the pitch of the segments 18. In an alternative embodiment, the segments 38 may be smaller in cross-sectional area from a perspective normal to the top surface 15 than the segments 18.

In an alternative embodiment, the pattern including the segments 18 may be altered to increase the pitch and/or size relative to the pitch and/or segment size for the pattern characterizing the segments 38.

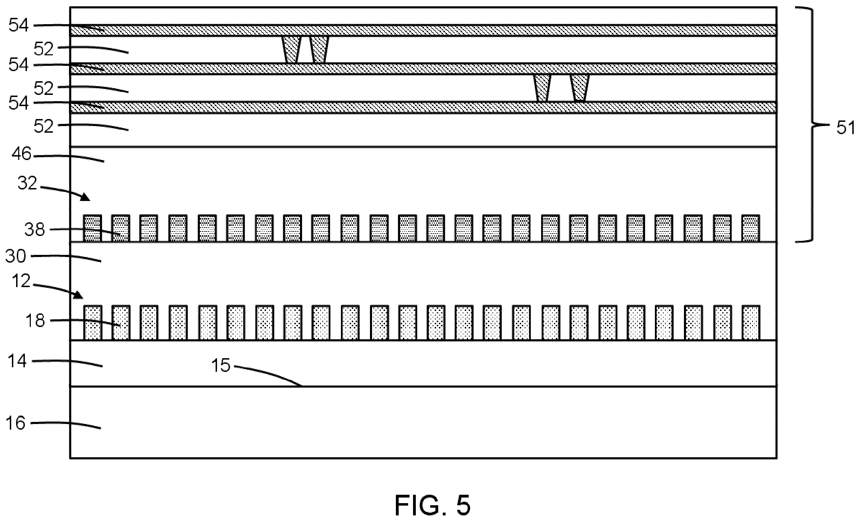

With reference to FIG. 5 and in accordance with alternative embodiments, the structure 10 may include a back-end-of-line stack 51 having multiple dielectric layers 52 arranged in a layer stack and metallization 54 arranged in the dielectric layers 52. The dielectric layer 46 may be included in the layer stack and the waveguide core 32 may be positioned in the back-end-of-line stack. The dielectric layers 52 may be comprised of dielectric materials, such as silicon dioxide, silicon nitride, tetraethylorthosilicate silicon dioxide, or fluorinated-tetraethylorthosilicate silicon dioxide. The metallization 54 may be comprised of one or more metals, such as aluminum or copper.

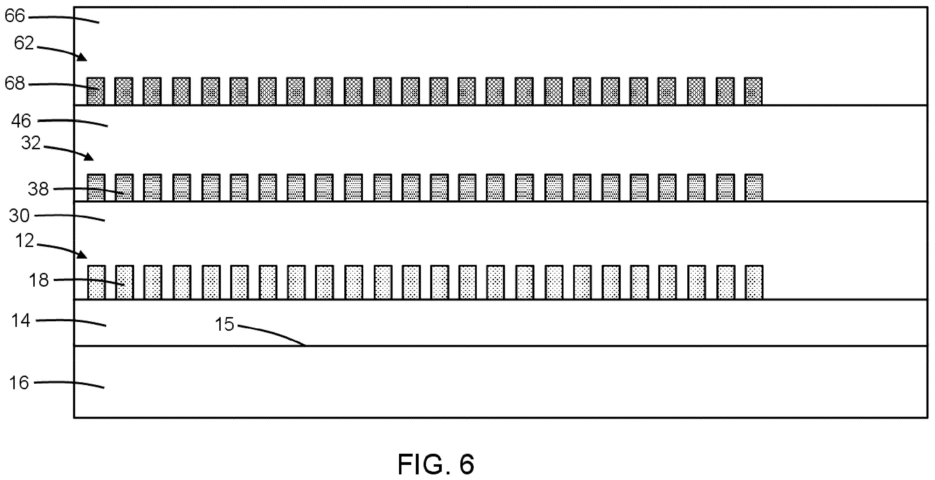

With reference to FIG. 6 and in accordance with alternative embodiments, the structure 10 may include a waveguide core 62 that is formed that is positioned on, and overlies, the dielectric layer 46. The waveguide core 62 may include segments 68 that are separated by spaces and that are arranged in a pattern. In an embodiment, the segments 68 may be arranged in the rows and columns of a two-dimensional array. In an embodiment, the segments 68 may be arranged with a uniform pitch and duty cycle in the rows and columns of a two-dimensional array. In an embodiment, the segments 68 may be arranged with a non-uniform pitch and/or non-uniform duty cycle in the rows and columns of a two-dimensional array. In an embodiment, the segments 68 may have a uniform size and shape. In an embodiment, the rows and/or columns of the array may include different numbers of the segments 68. The segments 68 may be distributed in a plane that is parallel to a plane of the top surface 15 of the semiconductor substrate 16.

The segments 68 of the waveguide core 62 may arranged in multiple sections similar or identical to the sections 40, 42, 44 including the segments 38 of the waveguide core 32 and/or the sections 20, 22, 24 including the segments 18 of the waveguide core 12. The waveguide core 62 may be terminated at one end by the segments 68 in the section 42. The segments 68 may be dimensioned and positioned at small enough pitch so as to define a sub-wavelength grating that does not radiate or reflect light at a wavelength of operation. For example, the periodicity of the segments 68 may be less than one-half the wavelength of the light propagating in the waveguide core 62.

In an embodiment, the waveguide core 62 may be comprised of a dielectric material, such as silicon nitride, silicon oxynitride, or aluminum nitride. In an alternative embodiment, the waveguide core 62 may be comprised of other materials, such as a polymer, thin film lithium niobate, barium titanate or a III-V compound semiconductor. In an embodiment, the waveguide core 62 may be formed by patterning a layer comprised of its constituent material with lithography and etching processes. In an embodiment, the waveguide core 62 may be comprised of a different material than the waveguide core 12 and/or the waveguide core 32. In an embodiment, the waveguide core 62 may be comprised of the same material as the waveguide core 12 and/or the waveguide core 62.

The segments 68 of the waveguide core 62 overlie the segments 38 of the waveguide core 32 with a portion of the thickness of the dielectric layer 46 positioned between the segments 68 of the waveguide core 62 and the segments 38 of the waveguide core 32. In an embodiment, the segments 68 of the waveguide core 62 may be arranged in the same pattern as the segments 18 of the waveguide core 12 and/or the segments 38 of the waveguide core 32. In an embodiment, the segments 68 of the waveguide core 62, the segments 38 of the waveguide core 32, and/or the segments 18 of the waveguide core 12 may be arranged with different patterns. In an embodiment, the segments 68 of the waveguide core 62 may be registered with the segments of the waveguide core 32 such that the segments 68 fully overlap with the underlying segments 38. In an alternative embodiment, the segments 68 of the waveguide core 62 may only partially overlap with the underlying segments 38.

A dielectric layer 66 may be formed over the waveguide core 62 and the dielectric layer 46. The dielectric layer 66 may be comprised of a dielectric material, such as silicon dioxide, that is deposited and then planarized following deposition. The dielectric material constituting the dielectric layer 66 may have a refractive index that is less than the refractive index of the material constituting the waveguide core 62.

Portions of the dielectric material of the dielectric layer 66 are positioned in the spaces between the segments 68 of the waveguide core 62 to provide a metamaterial structure. The dielectric material of the dielectric layer 66 is characterized by a refractive index that is less than the refractive index of the material constituting the waveguide core 62. The metamaterial structure may be treated as a homogeneous material having an effective refractive index that is intermediate between the refractive index of the material constituting the waveguide core 62 and the refractive index of the dielectric material constituting the dielectric layer 66.

The segments 18 of the waveguide core 12, the segments 38 of the waveguide core 32, and the segments 68 of the waveguide core 62 may collectively constitute a multiple-level composite waveguide core that may be integrated as a photonic component into a photonic integrated circuit. The addition of the waveguide core 62 to the composite waveguide core including the waveguide core 12 and the waveguide core 32 may further reduce coupling loss and dispersion compared to conventional waveguide cores. The addition of the waveguide core 62 to the composite waveguide core including the waveguide core 12 and the waveguide core 32 may also function to also further widen the operational wavelength range compared to conventional waveguide cores.

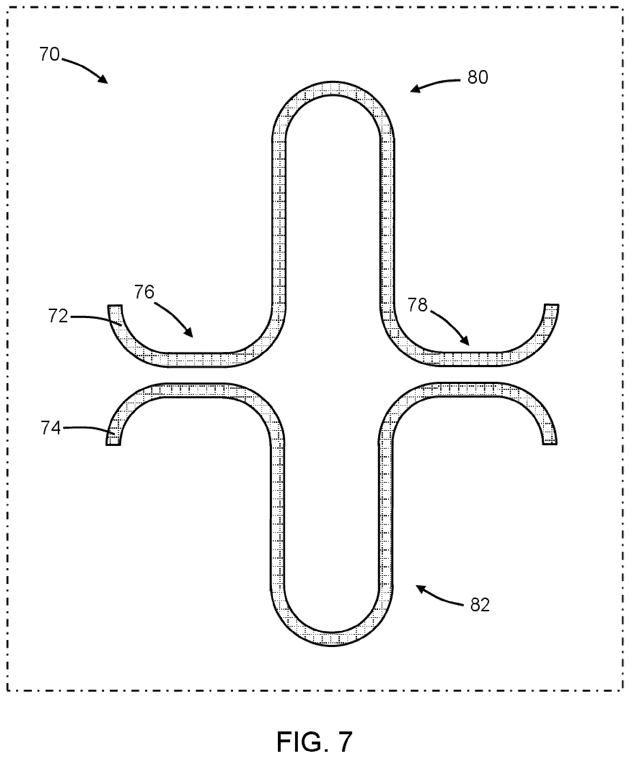

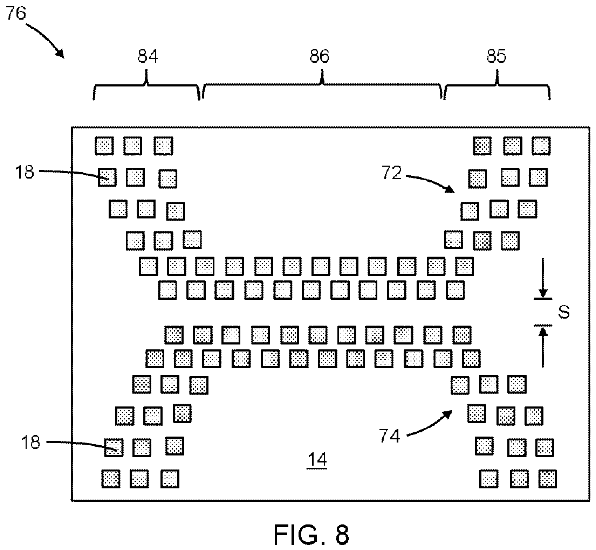

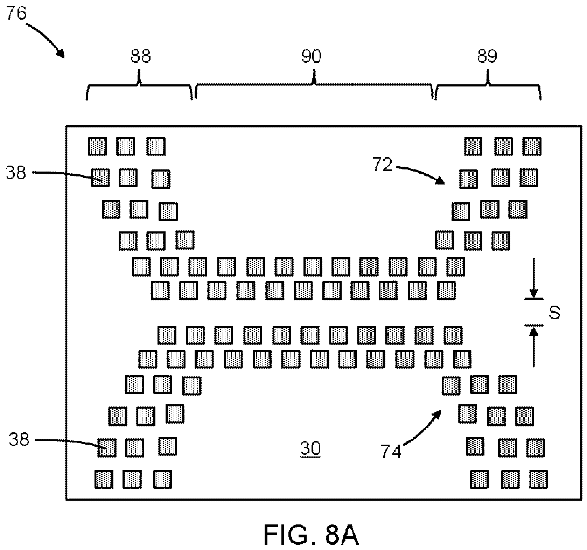

With reference to FIGS. 7, 8, 8A and in accordance with alternative embodiments, a structure 70 for a Mach-Zehnder interferometer may be deployed as a photonic component in a filter stage of a wavelength-division-multiplexing filter, and each filter stage may include one or more cascaded instances of the structure 70.

The structure 70 includes a waveguide core 72 and a waveguide core 74 that are routed to include adjacent sections that represent a directional coupler 76 and adjacent sections that define a directional coupler 78. The waveguide core 72 also includes a phase delay arm 80 that is joined by a bend to the section of the waveguide core 72 participating in the directional coupler 76 and that is joined by another bend to the section of the waveguide core 72 participating in the directional coupler 78. Similarly, the waveguide core 74 also includes a phase delay arm 82 that is joined by a bend to the section of the waveguide core 74 participating in the directional coupler 76 and that is joined by another bend to the section of the waveguide core 74 participating in the directional coupler 78. In a representative embodiment, the bends joining the directional couplers 76, 78 to the phase delay arms 80, 82 may extend over an arc equal to about 90°. The total length and associated optical path of the phase delay arm 80 may differ from the total length and associated optical path of the phase delay arm 82. In an embodiment, the total length and associated optical path of the phase delay arm 80 may be greater than the total length and associated optical path of the phase delay arm 82.

The phase delay arms 80, 82 and the directional coupler 78 may each be formed in their entirety from the segments 18 and the segments 38 that overlie the segments 18. For example and as shown in FIGS. 8, 8A, the directional coupler 76 includes the segments 18 and the segments 38 that overlie the segments 18. As the directional coupler 76 may include a section 84 in which the segments 18 are arranged in a bend and inside of a curved envelope, a section 85 in which the segments 18 are arranged in a bend and inside of a curved envelope, and a section 86 in which the segments 18 are arranged in a linear pattern between the segments 18 in the section 84 and the segments 18 in the section 85. As best shown in FIG. 8A, the directional coupler 76 may include a section 88 in which the segments 38 are arranged in a bend and inside of a curved envelope, a section 89 in which the segments 38 are arranged in a bend and inside of a curved envelope, and a section 90 in which the segments 38 are arranged in a linear pattern between the segments 38 in the section 88 and the segments 38 in the section 89. The segments 18, 38 in the directional coupler 76 are separated by a slot S over a coupling length.

The composite waveguide core that includes the waveguide core 72 with segments 18, 38 and the waveguide core 74 with segments 18, 38 may be deployed in other types of photonic components, such as a ring resonator or a ring-assisted Mach-Zehnder modulator.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature. A feature may "overlie" another feature if a feature is positioned "over" another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A photonic structure comprising:
a semiconductor substrate;
a first waveguide core including a first plurality of segments; and
a second waveguide core including a second plurality of segments, the second plurality of segments positioned between the first plurality of segments and the semiconductor substrate.

2. The photonic structure of claim 1 wherein the first plurality of segments have an overlapping relationship with the second plurality of segments, or wherein the first plurality of segments have a partially overlapping relationship with the second plurality of segments.

3. The photonic structure of claim 1 or claim 2 wherein the first plurality of segments comprise a first material, the second plurality of segments comprise a second material, and the second material differs from the first material, or wherein the first plurality of segments and the second plurality of segments comprise identical materials.

4. The photonic structure of one of claims 1 to 3 further comprising:
a third waveguide core including a third plurality of segments, the first plurality of segments positioned between the second plurality of segments and the third plurality of segments.

5. The photonic structure of one of claims 1 to 4 further comprising:
a first dielectric layer comprising a first dielectric material, the first dielectric layer including a portion positioned between the first plurality of segments and the second plurality of segments.

6. The photonic structure of claim 5 wherein the first plurality of segments have a first refractive index, the second plurality of segments have a second refractive index, and the first dielectric material has a third refractive index that is less than either the first refractive index or the second refractive index, and/or wherein the first plurality of segments are separated by a first plurality of spaces, the first dielectric material includes portions that are positioned inside the first plurality of spaces, and the first plurality of segments and the portions of the first dielectric material comprise a first metamaterial structure.

7. The photonic structure of one of claims 1 to 6 further comprising:
a second dielectric layer comprising a second dielectric material,
wherein the second plurality of segments are separated by a second plurality of spaces, the second dielectric material includes portions that are positioned inside the second plurality of spaces, and the second plurality of segments and the portions of the second dielectric material comprise a second metamaterial structure.

8. The photonic structure of one of claims 1 to 7 wherein the first plurality of segments are arranged in a first pattern, the second plurality of segments are arranged in a second pattern, and the first pattern is identical to the second pattern, and, optionally, wherein the first pattern is a first two-dimensional array, and the second pattern is a second two-dimensional array.

9. The photonic structure of one of claims 1 to 7 wherein the first plurality of segments are arranged in a first pattern, the second plurality of segments are arranged in a second pattern, and the first pattern differs from the second pattern, and, optionally, wherein the first pattern is a first two-dimensional array, and the second pattern is a second two-dimensional array.

10. The photonic structure of one of claims 1 to 9 wherein the first plurality of segments are arranged in a first bend, and the second plurality of segments are arranged in a second bend.

11. The photonic structure of one of claims 1 to 10 wherein the first waveguide core includes a first section, the second waveguide core includes a second section that overlies the first section of the first waveguide core, the first plurality of segments of the first waveguide core in the first section terminate the first waveguide core, and the second plurality of segments of the second waveguide core in the second section terminate the second waveguide core.

12. The photonic structure of claim 11 further comprising:
a light source on the semiconductor substrate, the light source configured to generate light that is coupled to the first section of the first waveguide core and the second section of the second waveguide core.

13. The photonic structure of one of claims 1 to 12 further comprising:
a third waveguide core including a third plurality of segments; and
a fourth waveguide core including a fourth plurality of segments, the fourth plurality of segments positioned between the third plurality of segments and the semiconductor substrate.

14. The photonic structure of one of claims 1 to 13 wherein the semiconductor substrate has a top surface, the first plurality of segments are distributed in a first plane that is parallel to the top surface, and the second plurality of segments are distributed in a second plane that is parallel to the top surface.

15. A method of forming a photonic structure, the method comprising:
forming a first waveguide core including a first plurality of segments; and
forming a second waveguide core including a second plurality of segments,
wherein the second plurality of segments are positioned between the first plurality of segments and a semiconductor substrate.
